# EUROPÄISCHE PATENTANMELDUNG

(11) **EP 2 479 467 A1**
(43) Veröffentlichungstag der Anmeldung: **25.07.2012**
(21) Anmeldenummer: 12152364.1
(22) Anmeldetag: 25.01.2012
(51) Int. Cl.: F16L 3/10

(54) **Anordnung mit zumindest einem draht- oder bandförmigen Bogenbauteil**

(30) Priorität: 25.01.2011 AT 972011
(71) Anmelder: Henn GmbH & Co.KG, 6850 Dornbirn (AT)
(72) Erfinder: Baldreich, Wolfgang, Lauterach 6923 (AT); Hartmann, Harald, 6850 Dornbirn (AT)
(74) Vertreter: Burger, Hannes

(57) **Zusammenfassung**

Anordnung (1) mit zumindest einem draht- oder bandförmigen Bogenbauteil (2), welches, in zumindest einer Vorderansicht gesehen, bogenförmig ausgeformt ist und einen inneren Freiraum (3) bereichsweise umschließt, wobei, in dieser Vorderansicht gesehen, zwischen zwei einander gegenüberliegenden Endbereichen (4) des Bogenbauteils (2) eine nach außen führende Durchgangsöffnung (5) des inneren Freiraums (3) angeordnet ist, wobei die Anordnung (1) zusätzlich zumindest ein Verschlussbauteil (6) aufweist, welches am Bogenbauteil (2) an dessen Endbereichen (4), vorzugsweise zerstörungsfrei, lösbar befestigt ist und die nach außen führende Durchgangsöffnung (5) verschließt.

## Beschreibung

Die vorliegende Erfindung betrifft eine Anordnung mit zumindest einem draht- oder bandförmigen Bogenbauteil, welches, in zumindest einer Vorderansicht gesehen, bogenförmig ausgeformt ist und einen inneren Freiraum bereichsweise umschließt, wobei, in dieser Vorderansicht zwischen einander gegenüberliegen-Endbereichen des Bogenbauteils eine außen führende Durchgangsöffnung des inneren Freiraums angeordnet ist,

Gattungsgemäße draht- bzw. bandförmige Bogenbauteile, häufig handelt es sich dabei um Drahtbiegeteile, werden häufig als Schüttgut in größeren Behältern gelagert bzw. transportiert. Bei der Entnahme der Bogenbauteile ergibt sich dann das Problem, dass mehrere Bogenbauteiie sich gegenseitig in ihre inneren Freiräume eingreifen, somit miteinander verhakt sind und nur schwer vereinzelt bzw. einzeln entnommen werden können, Dies führt zu einem an sich unnötigen Aufwand bei der Entnahme der Bogenbauteile aus dem Behälter. Nun ist es grundsätzlich denkbar, die Bogenbauteile nicht als Schüttgut sondern geordnet im Behälter zu und zu transportieren. Dies bedeutet aber wiederum einen erhöhten Aufwand beim ge-Einbringen der Bogenbauteile in den Behälter.

Aufgabe der Erfindung ist es eine Anordnung zu schaffen, bei der die Bogenbauteile als in einem Behälter transportiert und/oder gelagert werden können und trotzdem ohne großen Aufwand vereinzelt bzw. einzeln aus dem Behälter wieder entnommen werden können,

Die Erfindung sieht hierzu zu einer Verbesserung einer gattungsgemäßen Nordnung vor, dass die Anordnung zusätzlich zumindest ein verschlussbauteil aufweist, weiches am Bogenbauteil an dessen Endbereichen, vorzugsweise zerstörungsfrei, lösbar befestigt ist und die nach außen führende Durchgangsöffnung verschließt.

Vereinfacht gesprochen, wird somit mit dem Verschlussbauteil die Durchgangsöffnung des Bogenbauteils verschlossen, sodass sich mehrere, gegebenenfalls in einem Behälter als Schuttgut transportierte oder gelagerte nicht mehr ineinander verhaken können, Durch die, vorzugsweise zerstörungsfreie, Lösbarkeit des Versdhtussbauteits vom Bogenbauteil wird ein einfaches Abnehmen des Verschlussbauteils vom Bogenbauteil ermöglicht, wenn das Bogenbauteil dann nach seiner Entnahme aus dem Behälter seiner eigentlichen Funktion zugeführt wird. Durch Abnehmen des Verschlussbauteils vom Bogenbauteil wird dessen nach außen führende Durchgangsöffnung wieder frei.

Die Verwendung des Begriffs "Endbereich" deutet darauf hin, dass das Verschlussbauteil zwingend unmittelbar am jeweiligen Ende des Bogenbauteils befestigt sein muss. Es reicht, wenn dies im Endbereich erfolgt. Im Zweifel kann der Endbereich aus den letzten 30%, vorzugsweise den letzten 20% oder den letzten 10%, der Gesamtlänge des Bogenbauteiis, vom jeweiligen Ende aus gesehen, bestehen.

Eine zerstörungsfrei lösbare Befestigung des Verschlussbauteils am Bogenbauteil ist günstigerweise so ausgebildet, dass das Verschlussbauteil wieder verwendbar ist, nachdem es von einem Bogenbauteil gelöst worden ist, Bei der zerstörungsfrei lösbaren Befestigung zwischen Verschlussbauteil und Bogenbauteil handelt es sich in bevorzugten Ausgestaltungsformen um eine Schnappverbindung bzw. eine Verbindung bei der eines der Bauteile in das andere elastisch einrastet. Wird auf die Wiederverwendbarkeit verzichtet, so kann die genannte Befestigung z.B. auch über eine Sollbruchstelle, wie z.B. eine Materialschwächung, erfolgen.

Vorzugsweise sind sowohl Verschlussbauteil als auch Bogenbauteil bis zumindest 380° Celsius thermisch beständig, sodass eine thermische Spannungsfreistellung der Bogenbauteile mit daran angeordneten Verschlussteilen möglich ist. In diesem Sinne ist es günstig, wenn das Bogenbauteil und/oder das Verschlussbauteil aus Metall, vorzugsweise aus Stahl, ausgebildet ist bzw. sind. Grundsätzlich kann es sich aber auch um andere Materialien wie, insbesondere wenn die thermische Belastbarkeit nicht gefordert ist, Kunststoff oder Keramik und dergleichen handeln,

Bevorzugte Ausgestaltungsformen sehen vor, dass das Bogenbauteil in sich elastisch federnd ausgebildet ist. Dies ist häufig schon durch die spätere Verwendung des Bogenbauteils als Federelement vorgegeben. In diesem Sinne kann vorgesehen sein, dass das Bogenbauteil Federdraht oder ein Federband aufweist oder daraus besteht. Beim Bogenbauteil kann es sich um ein elastisch federndes aber auch starres Drahtbiegeteil handeln. Bevorzugt ist vorgesehen, dass Endbereiche des Bogenbauteils federnd aufeinander zu und voneinander weg bewegbar sind. Grundsätzlich kann auch das verschlussbauteil als elastisch federnder Körper ausgebildet sein. Ist aber bereits das Bogenbauteil elastisch federnd ausgebildet, so ist dies nicht mehr notwendig. Der Einfachheit halber kann somit vorgesehen sein, dass das Verschlussbauteil in sich starrer als das Bogenbauteil ausgebildet ist, Grundsätzlich ist es natürlich auch anders herum denkbar, vor allem, wenn das Bogenbauteil ein in sich starrer Körper ist, sollte dann das Verschlussbauteil günstigerweise elastischer als das Bogenbauteil ausgebildet sein.

Es ist darauf hinzuweisen, dass das Bogenbauteil sehr unterschiedlich aufgeführt sein kann, insbesondere bezüglich seiner Formgebung, welche in der Regel an die endgültige Verwendung des Bogenbauteils angepasst ist, Es kann sich z.B. um Bogenbauteile handeln, weiche in der Vorderansicht gesehen, im Wesentlichen C-förmig ausgebildet sind. Allgemeiner gesprochen handelt es sich um Bogenbauteile, welche sich, in der Vorderansicht gesehen und bezüglich eines im inneren Freiraum gelegenen Zentrums, bogenförmig über einen Winkel von zumindest 180°, vorzugsweise zumindest von 270°, erstrecken. Bei den Bogenbauteilen handelt es sich dabei günstigerweise um über diesen Winkelbereich in sich geschlossene oder insbesondere einstückige Körper deren vorzugsweise einzige Öffnung dann die Durchgangsöffnung in den inneren Freiraum ist.

Neben der Anordnung an sich betrifft die Erfindung auch einen Behälter, insbeson-Transportbehärter, mit zumindest einem Hohlraum zur Aufnahme von Gegendtänden, wobei in dem Hohlraum eine vielzahl von erfindungsgemäßen Anordnungen, vorzugsweise wirr verteilt, angeordnet ist. In den Behälter bzw, dessen Hohlraum können die Anordnungen als Schüttgut und damit wirr verteilt eingefüllt werden, ohne dass sie sich verhaken. In diesem Sinne ist günstigerweise vorgesehen, dass jedes der sich im Behälter bzw. dessen Hohlraum befindenden Bogenbauteile erfindungsgemäß mit einem Verschlussbauteil ist. Bei den Behältern kann es sich um Beutel, Säcke und dergleichen handeln. Bevorzugt handelt es sich um Kisten Kartons, bei denen der Hohlraum von starren oder im Wesentlichen bzw. ausreichend starren Wänden umgeben ist. Die Behälter können der Lagerung und/oder dem Transport der Anordnungen bzw. Bogenbauteilen dienen.

Letztlich betrifft die Erfindung auch ein Verfahren zum Transport und/oder zur Lagerung einer Vielzahl von draht- oder bandförmigen Bogenbauteilen in einem Hohlraum eines Behälters, wobei vorgesehen ist, die Bogenbauteile jeweils, in zumindest einer Vorderansicht auf das jeweilige Bogenbauteil gesehen, bogenförmig ausgeformt sind und jeweils einen inneren Freiraum bereichsweise umschließen, wobei jeweils in dieser Vorderansicht gesehen, zwischen zwei einander gegenüberliegenden Endbereichen des jeweiligen Bogenbauteils eine nach außen führende Durchgangsöffnung des inneren Freiraums angeordnet ist und die Bogenbauteile mit jeweils einem Verschlussbauteil jeweils eine erfindungsgemäße Anordnung ausbilden, In anderen Worten ist somit vorgesehen, dass die Bogenbauteile bei diesem Verfahren zum Transport und/oder zur Lagerung einer Vielzahl von solchen Bogenbauteilen jeweils in erfindungsgemäßer Art und Weise mit einem Verschlussbauteil verschlossen sind. Hierdurch können die Bogenbauteile bzw. Anordnungen als Schüttgut, also wirr durcheinander, im Hohlraum des Behälters angeordnet werden, ohne dass sie sich ineinander verhaken. Bevorzugt ist dabei vorgesehen, dass alle Bogenbauteile im Hohlraum erfindungsgemäß mit einem Verschlussbauteil verschlossen sind.

Weitere und Einzelheiten bevorzugter Ausgestaltungsformen der Eindung werden anhand der Figurenbeschreibung erläutert. Es zeigen:
Fig. 1 ein Beispiel eines drahtförmigen Bogenbauteils in einer Vorderansicht;
Fig. 2 und 3 Darstellungen zum zu lösenden Problem Standes der Technik;
Fig. 4 bis 6 Darstellungen eines erfindungsgemäßen Ausführungsbeispiels einer Anordnung;
Fig. 7 bis 12 weitere Beispiele erfindungsgemäßer Anordnungen in verschiedenen Darstellungen;
Fig. 13 eine schematisierte Darstellung eines Behälters, in dessen Hohlraum sich eine Vielzahl von erfindungsgemäßen Anordnungen befindet;
Fig. 14 Draufsicht in den Hohlraum des Behälters und
Fig. 15 die Detaildarstellung B aus Fig. 14.

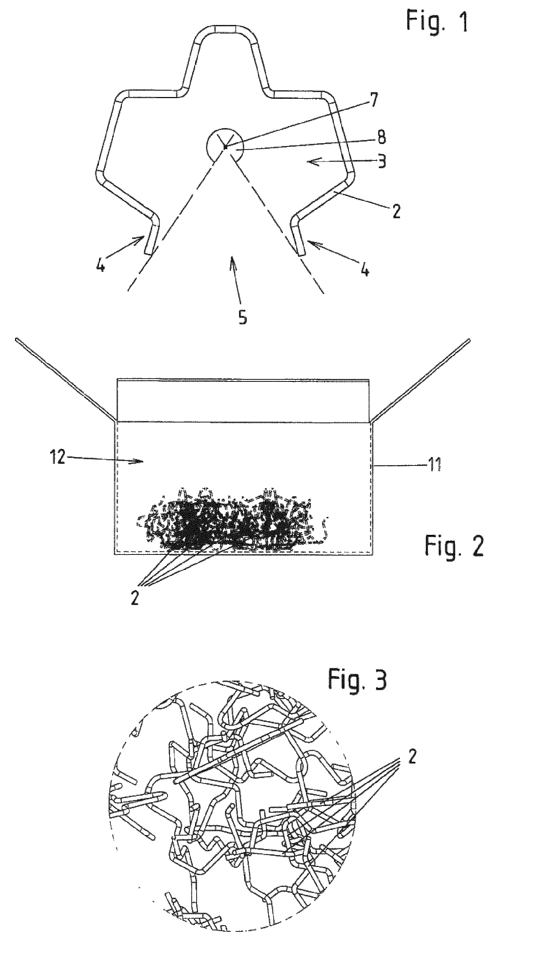

In Fig. 1 ist ein drahtförmige Bogenbauteil 2 in einer Vorderansicht dargestellt. Es handelt sich dabei in diesem Ausführungsbeispiel um ein Drahtbiegeteil. Das Bogenbauteil umschließt einen inneren Freiraum 3. Die Durchgangsöffnung 5 führt von diesem inneren Freiraum 3 nach außen und ist zwischen den zwei einander gegenüberliegenden Endbereichen 4 Bogenbauteils 2 angeordnet. Das hier dargestellte Bogenbauteil 2 ist im Wesentlichen C-förmig ausgebildet. Es ist nochmals darauf hinzuweisen, dass die Form des Bogenbauteils 2 sehr unterschiedlich sein kann. Sie ist an den jeweiligen Endverwendungszweck angepaßt.

Die Durchgangsöffnung 5 ist, in der Vorderansicht gesehen, üblicherweise die einzige Öffnung, ansonsten ist das Bogenbauteil 2 in sich geschlossen, Wie einerwähnt, ist günstigerweise vorgesehen, dass das Bogenbauteil sich, in der Vorderansicht gesehen, bezüglich des im inneren Freiraum 3 gelegenen Zentrums 7 bogenförmig über einen Winkel 8 von zumindest 180°, vorzugsweise von zumindest 270°, erstreckt, Im vorliegendem Ausführungsbeispiel ist der Winkel 8 größer als 270°.

Fig. 2 zeigt beispielhaft einen Behälter 11 zur Lagerung und/oder zum Transport solcher 2. Die Bogenbauteile 2 werden als Schüttgut, also wirr durcheinander, in den Hohlraum des Behälters eingefüllt. Fig. 2 zeigt die Situation gemäß Stand der Technik, bei der sich, wie in Fig. 3 vergrößert dargestellt, die einzelnen Bogenbauteile 2 ineinander verhaken, sodass sie nur mit erhöhtem Aufwand einzeln aus dem Hohlraum 12 des Behälters 11 entnommen bzw. vereinzelt werden können.

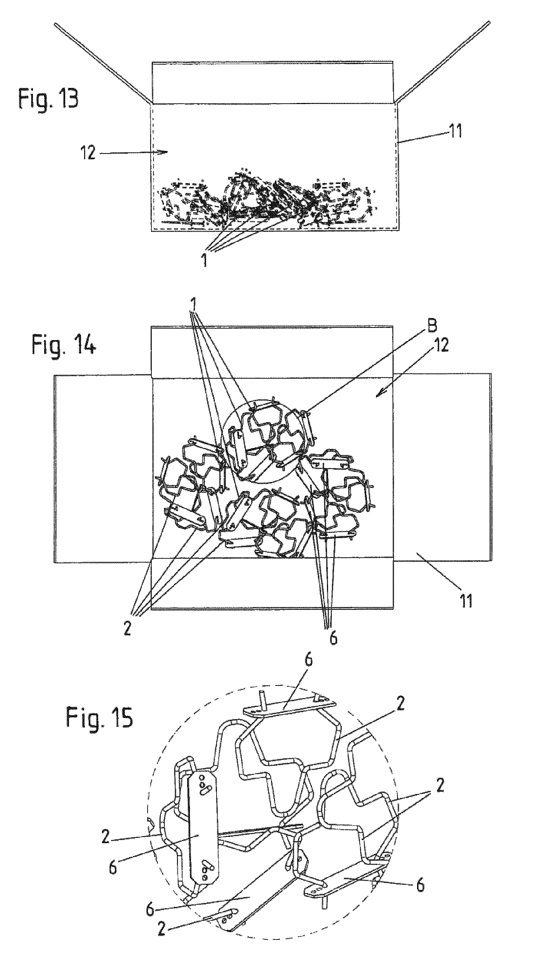

Der Vollständigkeit halber wird darauf hingewiesen, dass der Behälter 11 in Fig. 2 wie auch in Fig. 13 durchsichtig dargestellt ist, damit man durch die Seitenwände hindurch in den Innenraum blicken kann. Dies muss in der Realität natürlich nicht so sein. Bei den Behältern 11 selbst kann es sich um handelsübliche Kisten, Kartons aber auch Säcke, Beutel und dergleichen handeln.

Um das in Fig. 2 und 3 dargestellte Problem zu vermeiden, ist, wie bereits eingangs erwähnt, vorgesehen, dass die Anordnung 1 zusätzlich zum Bogenbauteil 2 zumindest ein Verschlussbauteii 6 aufweist, welches am Bogenbauteil 2 an dessen Endbereichen 4, vorzugsweise zerstörungsfrei, lösbar befestigt ist und die nach außen führende Durchgangsöffnung 5 verschließt.

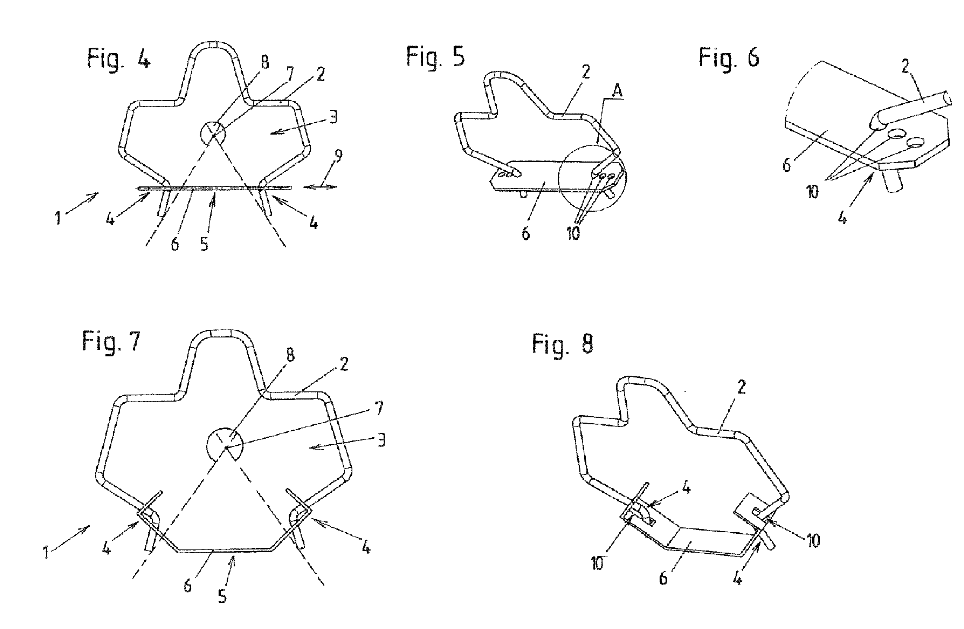

In den Fig. 4 bis 12 sind verschiedene, beispielhaft ausgewählte Ausgestaltungsformen von erfindungsgemäßen Anordnungen 1 geneigt, Die Fig. 4 bis 6 zeigen ein erstes Ausfuhrungsbeispiet in verschiedenen Darstellungen. Fig, 4 zeigt eine Vorderansicht, Fig. 5 eine perspektivische Darstellung und Fig. 6 das Detail im Bereich A aus Fig. 5.

Besonders gut ist in der Vorderansicht gemäß Fig, 4 zu sehen, wie das Verschlussbauteil 6 die Durchgangsöffnung 5 des Bogenbauteils 2 verschließt. Hierdurch ist sichergestellt, dass ein Verhaken, wie in den Fig. 2 und 3 dargestellt, nicht mehr vorkommen kann. Da das Bogenbauteil 2 im gezeigten Ausführungsbeispiel in sich elastisch ausgebildet ist und die endbereiche 4 des Bogenbauteils sich federnd aufeinander zu und voneinander weg bewegen lassen, kann das Verschlussbauteil 6 starrer als das Bogenbauteil 2 bzw. als in sich starrer Körper ausgebildet sein. Durch die elastische Verbiegbarkeit der Endbereiche 4 kann das Verschlussbauteil 6 durch Zusammendrücken der Endbereiche 4 vom Bogenbauteil 2 abgenommen werden, wenn es zum Transport und zur Lagerung nicht mehr benötigt wird.

Insbesondere in Fig. 5 ist gut zu sehen, dass das Verschlussbauteil 6 dieses Ausführungsbeispiels Ausnehmungen 10 aufweist, wobei das Bogenbauteil 2 zur Befestigung am Verschlussbauteil 6 mit seinen Endbereichen 4 in jeweils eine der Ausnehmungen 10 des Verschlussbauteils 6, vorzugsweise federnd, eingreift, Dies ist auch bei den nachfolgenden noch gezeigten Ausgestaltungsformen der Anordnung 1 so der Fall.

Wie in Fig. 6 besonders gut zu sehen ist, weist das verschlussbauteil 6 dieses Ausführungsbeispiels nicht nur zwei sondern insgesamt sechs solcher Ausnehmungen 10 auf. Dies ermöglicht es einerseits, das Verschlussbauteil 6 für verschieden große Bogenbauteile 2 zu verwender, Andererseits ist es aber auch möglich, Bogenbauteile 2 für den Zeitraum, in dem sie mit Verschlussbauteil 6 verbunden sind unter eine gewisse vordefinierte Vorspannung zu setzen. Im Ausführungsbeispiel gemäß der Fig. 4 bis 6 sind die Ausnehmungen 10 lochartig ausgebildet. Weiters ist in diesem ersten Ausführungsbeispiel gemäß der Fig. 4 bis 6 das verschlussbauteil 6 als ein zumindest abschnittsweise, hier vollständig, in einer Längsrichtung 9 längs erstreckter Körper ausgebildet. Beides muss nicht zwingend so sein.

Ein weiteres Ausführungsbeispiel ist in den Fig. 7 und 8 dargestellt. Fig. 7 zeigt wiederum eine entsprechende Vorderansicht. Fig. 8 eine perspektivische Darstellung. In diesem zweiten Ausführungsbeispiel sind die Ausnehmungen 10, in die die Endbereiche 4 des Bogenbauteils 2 eingreifen, schlitz- bzw. langlochartig ausgebildet. Auch in diesem Ausführungsbeispiel sind die Endbereiche 4 auf Grund der elastischen Ausgestaltung Bogenbauteils 2 in der Jeweiligen Ausnehmung 10 gehalten, bis durch entsprechendes elastisches Umformen der Endbereiche 4 bzw. des Bogenbauteils 2 diese so weit auseinandergedrückt werden, bis sie aus den Ausnehmungen 10 herausgenommen werden und damit das Verschlussbauteil 6 zerstörungsfrei vom Bogenbauteil 2 gelöst wird.

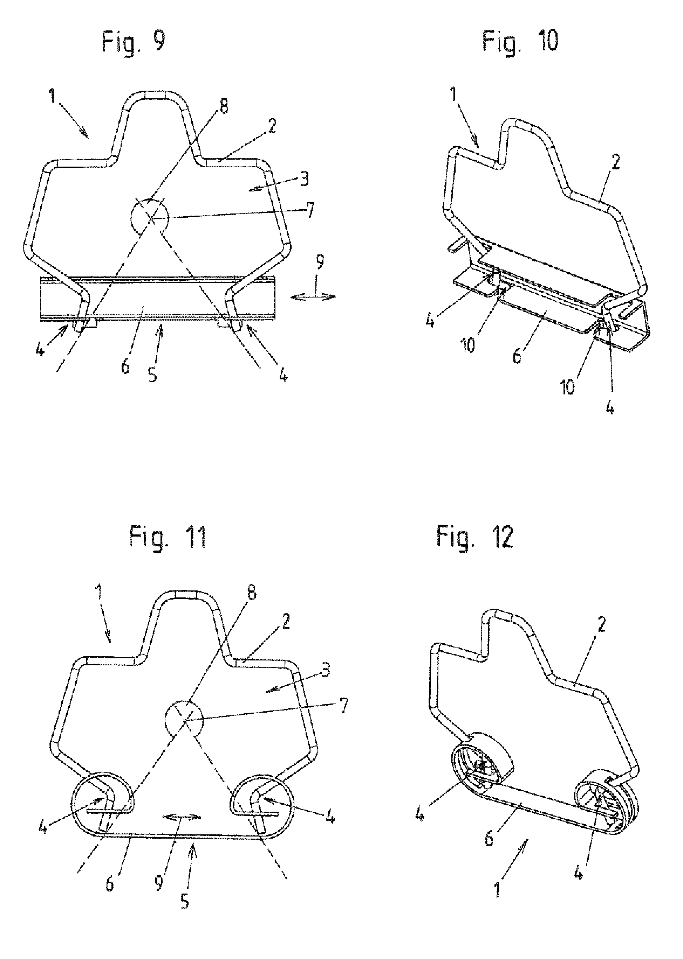

In den Fig. 9 bis 12 sind zwei weitere Ausführungsbeispiele der Erfindung gezeigt. Im Ausführungsbeispiel gemäß Fig. 9 und 10 sind die entsprechenden Ausnehmungen 10 des hier ebenfalls in Längsrichtung 9 längs erstreckten Verschlussbauteils 6 hakenförmig ausgebildet. Im Ausführungsbeispiel gemäß der Fig. 11 und 12 sind die einander gegenüberliegenden Enden des verschlussbauteils 6 aufgewickelt und weisen ebenfalls langloch- bzw. schlitzartige Ausnehmungen 10 auf, in die die einander gegenüberliegenden Endbereiche 4 des Bogenbauteils 2 eingreifen. Zum Lösen der Verschlussbauteile 6 von den Bogenbauteilen 2 reicht es auch in den beiden Ausführungsbeispielen gemäß der Fig. 9 bis 12 aus, die Bogenbauteile 2 so lang elastisch auseinander zu biegen, bis ihre jeweiligen Endbereiche 4 aus den Ausnehmungen 10 der Verschlussbauteile 6 herausgenommen werden können. Anschließend können die Bogenbauteile 2 wieder in ihre Ausgangsform elastisch zurückfedern.

Fig. 13 zeigt nun einen Behälter 11 in dessen Hohlraum 12 eine Vielzahl von erfindungsgemäßen Anordnungen 1 wirr durcheinander, also in Form von Schüttgut, angeordnet ist. Fig. 14 zeigt eine Draufsicht auf den offenen Behälter 11 in dessen Hohlraum 12. Fig. 15 zeigt das Detail B aus Fig. 14. Durch das erfindungsgemäße Verschließen der Durchgangsöffnung 5 der Bogenbauteile 2 mittels der Verschlussbauteile 6 wird auch in dieser wirren bzw. schüttgutartigen Anordnung der Bogenbauteile 2 verhindert, dass diese sich ineinander verhaken. Es kann somit nicht wie beim Stand der Technik zu einer Art Traubenbildung kommen. Die einzelnen Anordnungen 1 bzw. Bogenbauteile 2 können ohne Probleme einzeln aus dem Behälter 11 bzw. dessen Hohlraum 12 entnommen bzw. sonst wie vereinzelt werden. Hierdurch ist auch eine einfache und günstige Automatisierung möglich. Die erfindu ngsgemäße Verwendung von Verschlussbauteilen 6 führt nur zu einem sehr geringfügigen Mehrvolumen bei Transport und/oder Lagerung im Behälter 11. Die Vierschlussbauteile 6 können nach dem Entfernen vom Bogenbauteil 2 wiederverwendet werden. Auch beim Rücktransport der verschlussbauteile 6 für die Wiederverwendung fällt nur ein geringes Transportvolumen an. Neben den geschilderten Vorteilen bei Transport und Lagerung der erfindungsgemäßen Anordnungen 1 haben die Verschlussbauteile 6 auch noch den zusätzlichen Vorteil, dass sie die Bogenbauteile 2 in einer definierten Vorspannung bzw. Position halten, was zu einem gleichmäßigeren Endergebnis am Öffnungsmaß führt.

| | | | |
|---|---|---|---|
| Legende | | | |
| zu den Hinweisziffern: | | | |
| 1 | Anordnung | A | Ausschnitt |
| 2 | Bogenbauteil | B | Ausschnitt |
| 3 | innerer Freiraum | | |
| 4 | Endbereich | | |
| 5 | Durchgangsöffnung | | |
| 6 | Verschlussbauteil | | |
| 7 | Zentrum | | |
| 8 | Winkel | | |
| 9 | Längsrichtung | | |
| 10 | Ausnehmung | | |
| 11 | Behälter | | |
| 12 | Hohlraum | | |

## Patentansprüche

1. Anordnung (1) mit zumindest einem draht- oder bandförmigen Bogenbauteil (2), welches, in zumindest einer Vorderansicht gesehen, bogenförmig ausgeformt ist und einen inneren Freiraum (3) bereichsweise umschließt, wobei, in dieser Vorderansicht gesehen, zwischen zwei einander gegenüberliegenden Endbereichen (4) des Bogenbauteils (2) eine nach außen führende Durchgangsöffnung (5) des inneren Freiraums (3) angeordnet ist, **dadurch gekennzeichnet, dass** die Anordnung (1) zusätzlich zumindest ein Verschlussbauteil (6) aufweist, welches am Bogenbauteil (2) an dessen Endbereichen (4), vorzugsweise zerstörungsfrei, lösbar befestigt ist und die nach außen führende Durchgangsöffnung (5) verschließt.

2. Anordnung (1) nach Anspruch 1, gekennzeichnet, dass das Bogenbauteil (2), in der Vorderansicht gesehen, im Wesentlichen C-förmig ausgebildet ist.

3. Anordnung (1) nach Anspruch 1 oder 2, **dadurch gekennzeichnet, dass** das Bogenbauteil (2) sich, in der Vorderansicht gesehen und bezüglich eines um inneren Freiraum (3) gelegenen Zentrums (7), bogenförmig über einen Winkel (8) von zumindest 180°, vorzugsweise von zumindest 270°, erstreckt.

4. Anordnung (1) nach einem der Ansprüche 1 bis 3, **dadurch gekennzeichnet, dass** das Bogenbauteil (2) in sich elastisch federnd ausgebildet ist, vorzugsweise einen Federdraht oder ein Federband aufweist oder daraus besteht, und/oder dass die Endbereiche (4) des Bogenbauteils (2) federnd aufeinander zu und voneinander weg bewegbar sind.

5. Anordnung (1) nach einem der Ansprüche 1 bis 4, **dadurch gekennzeichnet, dass** das Verschlussbauteil (6) in sich starrer als das Bogenbauteil (2) ausgebildet ist.

6. Anordnung (1) nach einem der Ansprüche 1 bis 5, **dadurch gekennzeichnet, dass** das Verschlussbauteil (6) als ein zumindest abschnittsweise in eine Längsrichtung (9) längs erstreckter Körper ausgebildet ist.

7. Anordnung (1) nach einem der Ansprüche 1 bis 6, **dadurch gekennzeichnet, dass** das Verschlussbauteil (6), vorzugsweise loch- oder haken- oder langlochartige, Ausnehmungen (10) aufweist, wobei das Bogenbauteil (2) zur Befestigung am Verschlussbauteil (6) mit seinen Endbereichen (4) in jeweils eine der Ausnehmungen (10) des Verschlussbauteils (6), vorzugsweise federnd, eingreift.

8. Anordnung (1) nach einem der Ansprüche 1 bis 7, **dadurch gekennzeichnet, dass** das Bogenbauteil (2) und/oder das Verschlussbauteil (6) aus Metall, vorzugsweise aus Stahl, ausgebildet ist.

9. Behälter (11), insbesondere Transportbehälter, mit zumindest einem Hohlraum (12) zur Aufnahme von Gegenständen, wobei in dem Hohlraum (12) eine Vielzahl von Anordnungen (1) gemäß einem der Ansprüche 1 bis 8, vorzugsweise wirr verteilt, angeordnet ist.

10. Verfahren zum Transport und/oder zur Lagerung einer Vielzahl von draht- oder bandförmigen Bogenbauteilen (2) in einem Hohlraum (12) eines Behälters (11), wobei die Bogenbauteile (2) jeweils, in zumindest einer Vorderansicht auf das jeweilige Bogenbauteil (2) gesehen, bogenförmig ausgeformt sind und jeweils einen inneren Freiraum (3) bereichsweise umschließen, wobei jeweils, in dieser Vorderansicht gesehen, zwischen zwei einander gegenüberliegenden Endbereichen (4) eines jeweiligen Bogenbauteils (2) eine nach außen fürrende Durchgangsöffnung (5) des inneren Freiraums (3) angeordnet ist, **dadurch gekennzeichnet, dass** die Bogenbauteile (2) mit jeweils einem Verschlussbauteil (6) jeweils eine Anordnung (1) nach einem der Ansprüche 1 bis 8 ausbilden.
